# FASCICULE DE BREVET EUROPEEN

(11) **EP 3 002 853 B1**
(45) Date de publication et mention de la délivrance du brevet: **29.03.2023**
(21) Numéro de dépôt: 15184239.0
(22) Date de dépôt: 08.09.2015
(51) Int. Cl.: H02K 1/276, H02K 1/32, H02K 7/08, H02K 7/18

(54) **DYNAMOMETRE POUR BANC D'ESSAI DE TURBOMACHINE D'AERONEF**
DYNAMOMETER FÜR PRÜFSTAND EINES LUFTFAHRZEUG-TURBOTRIEBWERKS
DYNAMOMETER FOR A TEST STAND FOR AN AIRCRAFT TURBOMACHINE

(30) Priorité: 12.09.2014 BE 201400687
(43) Date de publication de la demande: 06.04.2016
(73) Titulaire: Safran Aero Boosters SA, 4041 Herstal (BE)
(72) Inventeur: LACROIX, Alain, 4160 Anthisnes (BE); MEYS, Benoît, 4347 Fexe-Le-Haut-Clocher (BE); TRAN, Quac Hung, 4020 Liège (BE)
(74) Mandataire: Lecomte & Partners

(56) Documents cités:
- EP-A1- 0 872 944
- EP-A1- 1 953 896
- WO-A1-2013/026088
- GB-A- 2 484 386
- US-A1- 2013 020 889
- US-A1- 2013 093 284
- US-A1- 2013 270 958
- US-B1- 6 717 282

## Description

### Domaine technique

L'invention a trait à un banc d'essai de turbomachine avec un dynamomètre formé par une machine électrique tournante.

### Technique antérieure

La conception ou l'entretien d'une turbomachine d'aéronef nécessite d'effectuer des campagnes de tests en vue de valider la turbomachine. Ces tests s'effectuent au sol dans des installations permettant de simuler différentes conditions de vol. Plusieurs modes de fonctionnement de la turbomachine sont étudiés en changeant certains de paramètres tour à tour. Ces tests durent de longues phases durant lesquelles la turbomachine génère une poussée dissipée dans l'environnement.

Pour des considérations d'économie d'énergie et environnementale, il est judicieux de récupérer une partie de l'énergie mécanique produite par la turbomachine. Cette récupération s'effectue à l'aide d'une machine électrique tournante. Le document US 6,717,282 B1 présente un exemple d'un tel banc. En raison de la puissance d'une turbomachine équipant un aéronef, par exemple un long-courrier, une énergie substantielle peut être récupérée et injectée sur un réseau électrique.

Le document JP2003-174747 A divulgue un dynamomètre générateur de courant électrique. Le dynamomètre comprend un rotor avec des pôles magnétiques formés par des paires d'aimants ayant des formes de plaques. Les aimants sont disposés en « V » en plaçant en regard deux pôles identiques en face l'un de l'autre. Cette configuration optimise le rendement du dynamomètre tout en prenant en compte les concentrations de contraintes liées à la force centrifuge. Cependant, les possibilités de récupération d'énergie restent limitées.

Le document WO 2013/026088 A1 décrit une machine électrique destinée à une éolienne tournant à 428 ou 573 tours par minute. Le rotor y est équipé d'aimants agencé en « V » préférentiellement à un angle compris entre 30 et 70°. US 2013/270958 A1 et US 2013/093284 A1 divulguent des autres machines électriques tournantes comprenant des paires d'aimants, les faces d'aimants formant entre elles un angle.

### Résumé de l'invention

### Problème technique

L'invention a pour objectif de résoudre au moins un des problèmes posés par l'art antérieur. Plus précisément, l'invention a pour objectif d'améliorer le rendement d'une machine électrique tournante. L'invention a également pour objectif d'optimiser le rendement et la résistance à la force centrifuge. L'invention a également pour objectif de récupérer davantage d'énergie sur un banc d'essai. L'invention a également pour objectif de réduire l'énergie nécessaire à la propulsion d'un véhicule automobile, de proposer une solution simple, résistante, légère, économique, fiable, facile à produire, commode d'entretien, d'inspection aisée, et améliorant le rendement.

### Solution technique

L'invention a pour objet un banc d'essai selon la revendication 1. D'autres modes de réalisation figurent dans les revendications dépendantes.

### Avantages apportés

L'invention permet d'améliorer le rendement d'une machine électrique tournante en augmentant le flux traversant l'entrefer tout en limitant l'échauffement. Le gain sur le flux est atteint grâce à l'orientation des aimants et grâce à la diminution de l'entrefer qui est autorisée par l'architecture des renflements.

Cette configuration compacte est particulièrement performante pour produire de l'énergie électrique malgré les puissances en jeu, et ce à des vitesses de rotation d'environ 7500 tr/min pour une turbomachine d'avion. L'orientation des aimants permet en outre de réaliser un compromis entre les paramètres liés au rendement de la machine électrique tournante et la résistance mécanique malgré l'importance de la force centrifuge.

### Brève description des dessins

La figure 1 représente un banc d'essai pour turbomachine selon l'invention.
La figure 2 est une section d'une machine électrique.
La figure 3 illustre une coupe du rotor et du stator de la machine électrique tournante suivant l'axe 3-3 tracé sur la figure 2.
La figure 4 ébauche une vue en plan d'un renflement du rotor.
La figure 5 esquisse une coupe suivant l'axe 5-5 tracé sur la figure 4 d'un renflement.
La figure 6 représente une portion angulaire de rotor et de stator de la machine électrique.
La figure 7 illustre une paire d'aimant d'un pôle magnétique résultant.
La figure 8 ébauche un véhicule à propulsion électrique qui ne fait pas partie de l'invention.

### Description des modes de réalisation

Dans la description qui va suivre, les termes intérieur ou interne et extérieur ou externe renvoient à un positionnement par rapport à l'axe de rotation du banc d'essai ou de la machine électrique. La direction axiale est suivant l'axe de rotation.

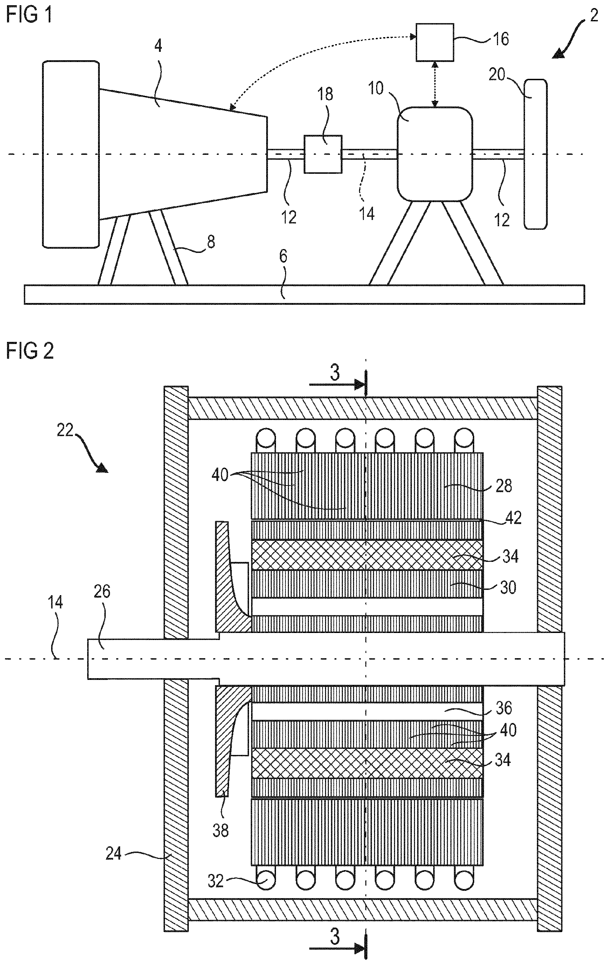

La figure 1 représente de manière simplifiée un banc d'essai 2 pour turbomachine 4 d'aéronef.

Le banc d'essai 2 repose sur un support 6 auquel les différentes entités sont reliées. Le banc d'essai 2 comprend une zone de réception pour la turbomachine 4, avec des liaisons 8 pour fixer la turbomachine au support 6. Il comprend également un dynamomètre 10 qui exerce un couple résistant à la turbomachine 4 via un arbre de transmission 12 tournant autour de l'axe de rotation 14 commun. Le dynamomètre 10 comprend une machine électrique tournante et un afficheur permettant à un utilisateur de lire la puissance récupérée par le dynamomètre 10. Le banc 2 peut comprendre une unité de commande 16 programmable permettant de piloter la turbomachine 4 et le dynamomètre 10 de sorte à faire varier le couple résistant selon des tests programmés. La variation du couple résistant s'effectue en modifiant la charge électrique connectée au dynamomètre lorsqu'il fonctionne en générateur. L'unité 16 sert par ailleurs d'interface utilisateur et peut être l'afficheur du dynamomètre.

Lors du fonctionnement de la turbomachine 4, le dynamomètre 10 converti l'énergie mécanique de la turbomachine 4 en énergie électrique, la puissance de la turbomachine peut produire plus de 1000 kW via le dynamomètre. Cette énergie est soit stockée soit réinjectée sur un réseau électrique (non représenté) auquel le dynamomètre est branché. Un convertisseur de fréquences, à quatre quadrants, fonctionnant sur des plages allant jusqu'à 500Hz, permet d'adapter la fréquence du courant produit aux exigences du réseau. Il est possible d'alimenter le dynamomètre de sorte qu'il se comporte comme un moteur, par exemple de sorte à entraîner la turbomachine 4.

Le dynamomètre 10 peut être relié en prise directe à l'arbre moteur, éventuellement l'arbre primaire de la turbomachine. Pour les besoins du test, l'éventuelle soufflante de la turbomachine peut optionnellement être démontée, ce qui augmente l'énergie électrique produite. La vitesse de rotation du dynamomètre 10 peut être supérieure à 5000 tr/min, préférentiellement supérieure à 10000 tr/min. En complément, le banc 2 d'essai peut comporter un capteur de couple 18 sur l'arbre de transmission 12 pour contrôler le couple résistant du dynamomètre 10, et un volant d'inertie 20. L'unité de commande permet également de collecter, d'enregistrer, et de traiter des mesures sur les températures, les vitesses de rotation, la puissance récupérée, le couple, et les vibrations.

La figure 2 est une vue en coupe d'une machine électrique tournante 22 telle que celle du dynamomètre de la figure 1. Elle peut fonctionner dans les deux sens de rotation.

La machine électrique tournante 22 peut comprendre un carter externe 24 et un arbre 26 destiné à être relié au moteur. La machine 22 comprend un stator 28 solidaire du carter 24 et un rotor 30 solidaire de l'arbre 26 et tournant à l'intérieur du stator autour de l'axe de rotation 14. Le stator 28 peut présenter une forme annulaire, tel un tube, qui délimite un espace cylindrique dans lequel est placé le rotor 30 cylindrique. Le stator 28 peut comprendre un système de refroidissement avec des tuyaux 32 véhiculant un fluide de refroidissement. La machine électrique 22 étant du type à courant alternatif multipolaire, son stator 28 présente un bobinage polyphasé.

Le rotor 30 comprend des aimants permanents 34, qui peuvent présenter des formes de plaques qui s'étendent sur toute la longueur axiale du rotor 30. Chaque plaque, et donc chaque aimant 34, présente des faces principales opposées selon l'épaisseur de la plaque. Les faces principales sont les plus grandes et peuvent être parallèles.

Le rotor 30 peut également comprendre des jeux de canaux de refroidissement 36 s'étendant axialement tout le long du rotor 30. Les canaux 36 d'un même jeu sont disposés à une même hauteur radiale par rapport à l'axe de rotation 14. Un ventilateur 38 radial peut être placé sur un des côtés axiaux du rotor pour entraîner de l'air au travers des canaux de refroidissement 36.

Le rotor 30 et le stator 28 peuvent chacun être formé d'un empilement axial de tôles 40 magnétiques ou ferromagnétiques, qui permettent de créer un circuit magnétique. Des fentes et des ouvertures sont formées dans les tôles du rotor pour y insérer les aimants 34 et pour délimiter les canaux de refroidissement 36. Les champs magnétiques des aimants cheminent dans les tôles ferromagnétiques du rotor et du stator qui forment le circuit magnétique. L'espace annulaire entre le stator et le rotor forme un entrefer 42 dans le circuit.

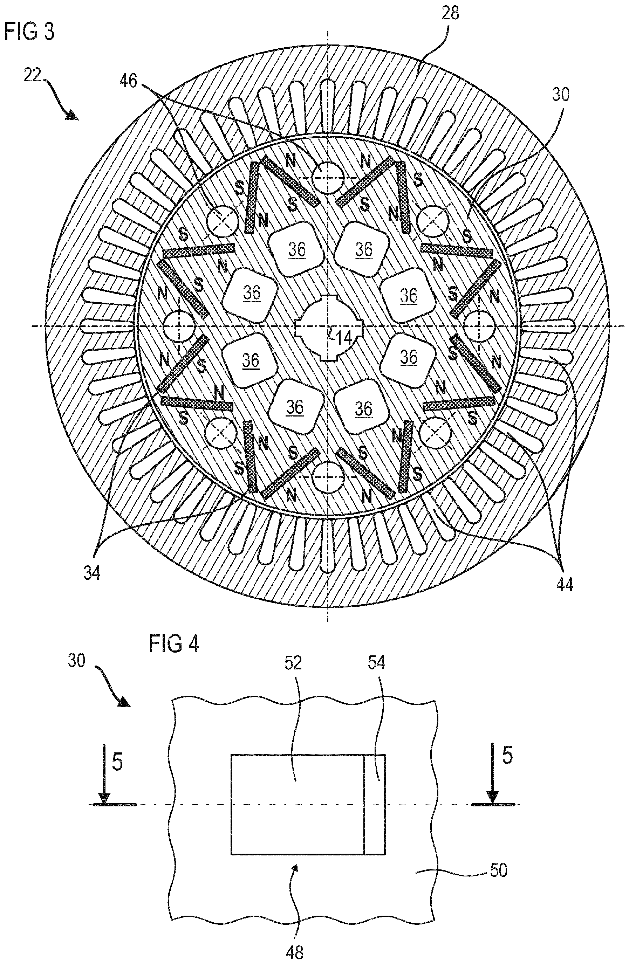

La figure 3 esquisse une coupe suivant l'axe 3-3 tracé sur la figure 2 du rotor 30 et du stator 28 de la machine électrique.

Le stator 28 présente des encoches 44 ou dentures 44 pour y placer des bobines (non représentées) ; lors de la rotation du rotor 30, le passage des aimants 34 du rotor permettent de créer du courant électrique dans les bobines en vue de produire de l'énergie récupérable.

Chaque aimant permanent 34 comprend un pôle nord N et un pôle sud S; chacun de ces pôles étant agencé sur une des faces principales des aimants. Les aimants 34 sont associés par paires, les aimants 34 de chaque paire ayant des faces externes avec des pôles de mêmes polarités (N ; S), c'est-à-dire de mêmes noms. La combinaison de chaque paire d'aimants 34 et du matériau ferromagnétique du rotor 30, forme un pôle magnétique résultant de même polarité que les pôles des faces externes des aimants 34 de la paire. L'ensemble des aimants 34 forme une alternance de polarités de pôles magnétiques résultants selon le tour du rotor 30. L'alternance de polarités (N ; S) s'effectue d'une paire d'aimants à l'autre, l'aspect voisin étant apprécié selon la circonférence du rotor. En l'occurrence, le rotor 30 présente quatre pôles nord résultants entre lesquels sont placés par alternance quatre pôles sud résultants.

Les aimants 34 sont orientés de manière inclinée par rapport à la direction radiale et la direction circonférentielle. Ils présentent chacun une face interne en regard de l'axe de rotation 14, et une face externe en regard de l'extérieur du rotor, les faces étant planes.

Le rotor 30 comprend au moins un premier jeu de canaux de refroidissement 46 et un deuxième jeu de canaux de refroidissement 36, chaque jeu comprend par exemple huit canaux. Les premiers canaux 46 peuvent avoir une forme cylindrique. Les deuxièmes canaux 36 peuvent avoir un profil rectangulaire ou généralement carré. Les milieux, selon la circonférence, des canaux d'un jeu de canaux (36 ; 46) sont décalés angulairement par rapport aux milieux, selon la circonférence, des canaux de l'autre jeu.

La figure 4 représente un renflement 48 formé sur la surface externe 50 du rotor 30.

La machine électrique peut comprendre un amortisseur hydrodynamique. Cet amortisseur peut être formé sur le stator et/ou sur le rotor 30. Ce dernier peut comprendre des renflements 48, par exemple arrangés en plusieurs rangées annulaires. Au moins un ou chaque renflement 48 peut former une empreinte rectangulaire en deux portions (52 ; 54) inclinées par rapport à la surface externe 50 du rotor 30. Le renflement 48 est délimité axialement par des flancs radiaux.

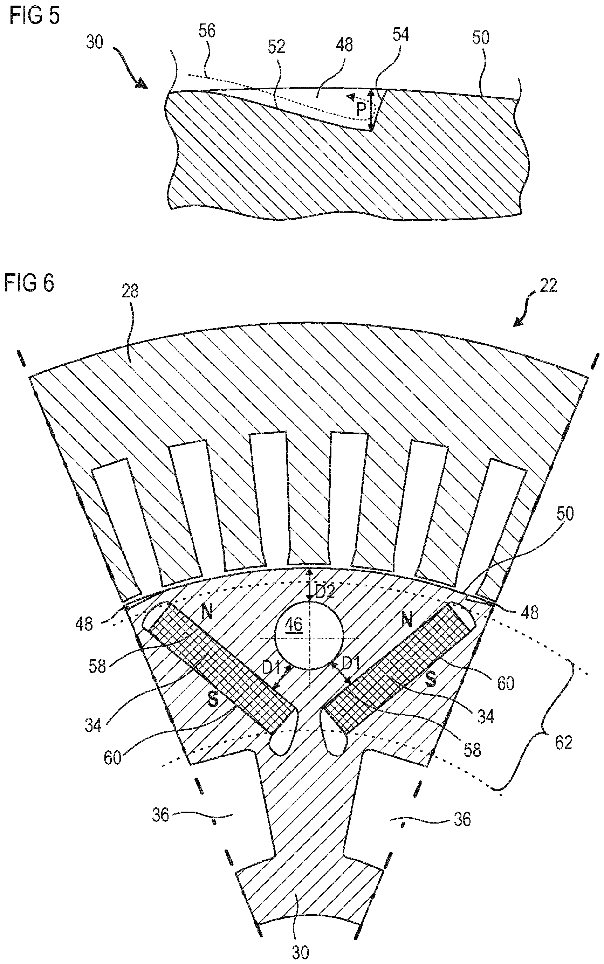

La figure 5 ébauche une coupe d'un renflement 48 selon l'axe 5-5 tracé sur la figure 4.

La première portion 52 est généralement tangente, selon la circonférence, à la surface externe 50 du rotor 30, la deuxième portion 54 s'étend généralement radialement. Lors de la rotation, l'air s'engouffre 56 dans le renflement 48 en longeant la première portion 52 puis bute contre la deuxième portion 54 ; ce qui en augmente la pression. De la sorte, des coussins d'air se forment et permettent de centrer le rotor par rapport au stator, ce qui autorise une réduction de l'entrefer lors de la conception. Cet aspect augmente le rendement de la machine électrique en limitant les pertes magnétiques. La profondeur P des renflements peut être comprise entre 0,1 mm et 10 mm, préférentiellement comprise entre 0,2 mm et 0,4 mm. Ces valeurs sont bénéfiques pour des rotors 30 de diamètres externes compris entre 10 cm et 60 cm, préférentiellement compris entre 25 cm et 40 cm.

Selon une variante de l'invention, les deux portions du profil de l'empreinte peuvent être des arcs de cercles formant des renfoncements concaves. La jonction des portions forme une inflexion, et les deux portions peuvent être symétriques pour permettre un fonctionnement dans les deux sens de rotation.

La figure 6 représente un agrandissement d'une portion angulaire représentative du rotor 30 et du stator 28 de la machine électrique 22. La portion angulaire montre un pôle résultant nord qui résulte de la combinaison d'une paire d'aimants 34 avec des pôles nord N vers l'extérieur.

Le ou chaque premier canal 46 est à hauteur radialement des aimants 34 et est placé en regard des faces externes 58 des aimants 34. Les deuxièmes canaux 36 sont disposés en regard des faces internes 60 des aimants 34. Lors de la rotation du rotor 30, les aimants 34 balayent une zone annulaire 62 ; les premiers canaux 46 étant disposés dans l'épaisseur radiale de la zone annulaires 62 et les deuxièmes canaux 36 étant enveloppés par la zone annulaires 62. Les aimants 34 chevauchent au moins majoritairement chaque canal selon la circonférence.

La distance entre l'axe de rotation et tout point des premiers canaux 46 est comprise dans l'intervalle de distance entre l'axe de rotation et tout point des aimants 34. La distance maximale entre les deuxièmes canaux 36 et l'axe de rotation est inférieure à la distance minimale entre les premiers canaux 46 et l'axe de rotation. Les distances considérées sont des distances radiales. Les canaux permettent de refroidir le rotor et évitent la montée en température des aimants pour qu'ils conservent leurs propriétés magnétiques, afin de préserver le rendement de la machine électrique 22.

Le ou chaque premier canal 46 peut être plus proche des aimants 34 que de la surface externe 50 du rotor 30 pour mieux refroidir les aimants 34, toujours dans l'optique de préserver les performances de la machine. La distance D1 entre la surface externe 50 du rotor 30 et le premier canal 46 est supérieure à la distance D2 entre le premier canal 46 et les aimants 36. Par ailleurs, le diamètre du premier canal 46 peut être inférieur à la largeur ou à la moitié de la largeur de la face 58 de l'aimant 34 qui est en regard, ceci dans l'optique de préserver la section du circuit magnétique entre les aimants et la surface externe du rotor. La largeur est mesurée transversalement par rapport à l'axe de rotation.

Les renflements 48 sont disposés selon la circonférence au niveau des sommets externes des aimants 34, en particulier entre des aimants 34 dont l'orientation des pôles est asymétrique. Les renflements 48 peuvent être disposés entre les pôles résultants.

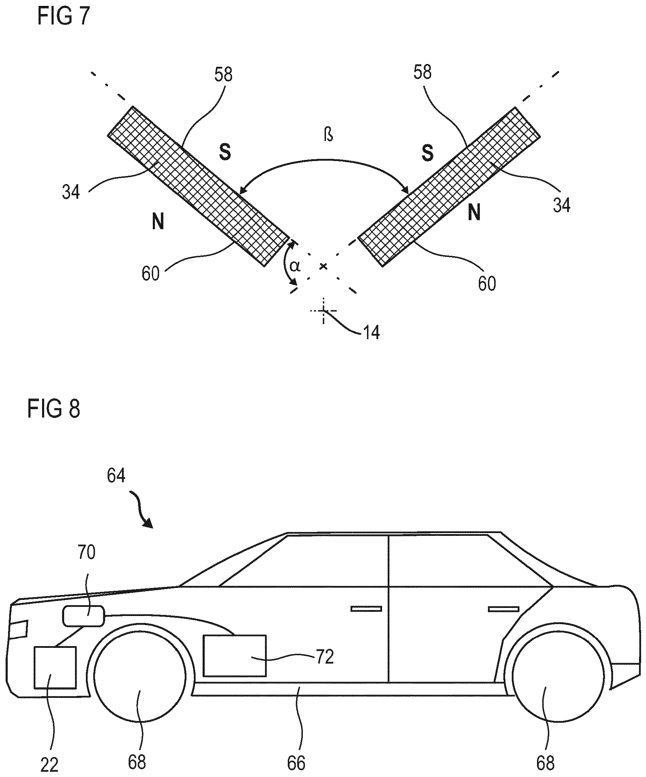

La figure 7 représente une paire d'aimants 34 d'un pôle magnétique résultant sud. En l'occurrence, les pôles sud S sont orientés vers l'extérieur par rapport à l'axe de rotation 14, et sont en regard l'un de l'autre.

Les aimants 34 de chaque pôle résultant sont inclinés l'un par rapport à l'autre, éventuellement de manière symétrique par rapport à un plan axial passant par l'axe de rotation 14. Les faces externes 58 où siègent des pôles de mêmes noms décrivent un angle ß qui est compris entre 95° et 100°. Eventuellement l'angle β est égal à 100°. Cette orientation de faces (58 ; 60) améliore le rendement de la machine électrique. Un dynamomètre de cette architecture aura un rendement de production d'énergie électrique accru. Un moteur électrique conforme à cette architecture offrira davantage de travail mécanique lorsqu'il est alimenté.

L'un des aimants 34 de chaque pôle magnétique est tourné par rapport au plan de la face externe 58 de l'autre aimant Ainsi, les faces externes 58 des aimants du pôle résultant sont inclinées l'une par rapport à l'autre d'un angle α compris entre 80° et 85°, éventuellement l'angle α est égal à 80°. Chaque aimant présente un plan moyen selon son épaisseur, ces plans étant inclinés de l'angle α. Les faces externes 58 d'au moins un ou de chaque pôle résultant présentent des droites normales à leurs surfaces respectives qui sont inclinées l'une par rapport à l'autre de l'angle α.

La figure 8 représente un véhicule 64 automobile qui ne fait pas partie de l'invention. Ce véhicule a une machine électrique tournante 22 telle que celle décrite dans les figures précédentes.

Le véhicule 22 comprend un châssis 66 et des roues 68 dont certaines sont motrices. Le véhicule 64 est propulsé par une machine électrique tournante 22 qui peut être un moteur électrique 22. Le véhicule 64 peut comprendre une batterie 70 pour fournir de l'énergie électrique à la machine électrique 22. Ce mode de propulsion permet de réduire l'énergie nécessaire à propulser le véhicule grâce au rendement de la machine électrique 22, la batterie 70 pouvant être rechargée par une source extérieure.

En complément, le véhicule 64 peut comprendre un moteur thermique 72, c'est-à-dire fonctionnant à l'aide d'un carburant. Le moteur thermique 72 est également configuré pour propulser le véhicule 64. Le moteur thermique 72 peut comprendre un alternateur pour recharger la batterie 70, tout comme peut le faire la machine électrique 22. Ce dernier cas peut se produire en phase de freinage, ou lorsque le couple délivré par le moteur thermique est supérieur aux besoins. Le véhicule offre un mode de propulsion hybride, qui permet de réduire sa consommation tout en offrant une puissance totale accrue.

## Revendications

1. Banc d'essai (2) pour turbomachine (4) double-flux, le banc d'essai (2) comprenant une zone de réception d'une turbomachine à tester et un dynamomètre (10) relié à la turbomachine à tester, le dynamomètre (10) comprenant une machine électrique tournante (22) comprenant un stator (28), et un rotor (30), le banc étant **caractérisé en ce que** le rotor (30) du dynamomètre (10) est apte à tourner à 7500 tours par minute, le rotor (30) comportant une rangée circulaire de pôles magnétiques résultants dont les polarités forment une alternance de pôles magnétiques opposés ;
chaque pôle résultant incluant une paire d'aimants permanents (34), chaque aimant (34) comportant deux faces opposées (58 ; 60) et deux pôles (N ; S) opposés qui sont chacun situés sur l'une des faces opposées (58 ; 60) de l'aimant (34) ;
dans chaque pôle résultant les aimants (34) étant disposés de sorte à présenter des faces (58) ayant des pôles (N ; S) de mêmes polarités qui sont orientées radialement vers l'extérieur et en regard l'une de l'autre, la combinaison desdits pôles détermine la polarité du pôle résultant ;
dans chaque pôle résultant, les faces (58) d'aimants de mêmes polarités et orientées vers l'extérieur formant entre elles un angle β compris entre 95° et 100°.

2. Banc d'essai (2) selon la revendication 1, **caractérisé en ce que** l'angle β est égal à 100°.

3. Banc d'essai (2) selon l'une des revendications 1 à 2, **caractérisé en ce que** le rotor (30) comprend un empilement de tôles magnétiques (40) dans lesquelles sont insérés les aimants (34), le rotor (30) comprend huit pôles magnétiques résultants et seize aimants (34).

4. Banc d'essai (2) selon l'une des revendications 1 à 3, **caractérisé en ce que** le rotor (30) forme un corps cylindrique dont la surface externe (50) comporte un ou plusieurs renflements (48) formant des amortisseurs hydrodynamiques, les renflements (48) formant éventuellement au moins une rangée circulaire de renflements (48) configurée pour assurer une concentricité entre le stator (28) et le rotor (30).

5. Banc d'essai (2) selon la revendication 4, **caractérisé en ce que** au moins un ou chaque renflement (48) comprend un profil, suivant un plan perpendiculaire à l'axe de rotation (14), avec une portion (52) généralement tangente à la surface externe (50) du rotor (30), et une portion (54) s'étendant principalement radialement.

6. Banc d'essai (2) selon l'une des revendications 1 à 5, **caractérisé en ce que** le rotor (30) comprend un premier jeu de canaux axiaux de refroidissement (46) disposés entre les aimants (34) de chaque pôle résultant, les premiers canaux (46) étant logés dans une zone annulaire (62) délimitée radialement par la hauteur radiale des aimants (34).

7. Banc d'essai (2) selon la revendication 6, **caractérisé en ce que** les premiers canaux (46) sont cylindriques, la distance D1 entre la surface extérieure (50) du rotor et chaque premier canal (46) est supérieure ou égale à la distance D2 entre chaque premier canal (46) et chaque aimant (34) associé, le diamètre des canaux (46) étant inférieur à la largeur, préférentiellement inférieur à la moitié de la largeur des faces (58) d'aimants ayant des pôles de mêmes polarités et orientées vers l'extérieur.

8. Banc d'essai (2) selon l'une des revendications 1 à 7, **caractérisé en ce que** le rotor (30) comprend des deuxièmes canaux axiaux de refroidissement (36), l'axe de rotation (14) étant plus proche radialement des deuxièmes canaux (36) que des aimants (34).

9. Banc d'essai (2) selon l'une des revendications 6 à 8, **caractérisé en ce que** le rotor (30) comprend un ventilateur centrifuge (38) avec des pales radiales configurées pour entraîner une circulation d'air au travers de chaque canal de refroidissement (36 ; 46).

10. Banc d'essai (2) selon l'une des revendications 6 à 9 **caractérisé en ce que** les aimants (34) occupent angulairement la majorité de la circonférence du rotor (30), éventuellement les aimants (34) recouvrent la majorité de l'étendue circonférentielle de chaque canal (36 ; 46) d'au moins un jeu de canaux, préférentiellement de chaque jeu de canaux.

11. Banc d'essai (2) selon l'une des revendications 1 à 10, **caractérisé en ce qu'**il comprend une unité de commande (16) configurée pour piloter le couple résistant exercé par le dynamomètre (10), et éventuellement un couple-mètre (18) relié au dynamomètre (10) et connecté à l'unité de commande (16) de sorte à mesurer le couple résistant que le dynamomètre (10) oppose à la turbomachine (4).

## Patentansprüche

1. Prüfstand (2) für eine Doppelstrom-Turbomaschine (4), wobei der Prüfstand (2) einen Aufnahmebereich für die zum testend Turbomaschine und ein mit der zum testend Turbomaschine verbundenes Dynamometer (10) umfasst, wobei das Dynamometer (10) eine rotierende elektrische Maschine (22) mit einem Ständer (28) und einem Rotor (30) umfasst, **dadurch gekennzeichnet, dass** der Rotor (30) des Dynamometers (10) bei 7500 Umdrehungen pro Minute drehbar ist, wobei der Rotor (30) eine kreisförmige Anordnung von sich daraus ergebenden Magnetpolen aufweist, deren Polaritäten eine Abwechslung von entgegengesetzten Magnetpolen bilden;
jeder sich ergebende Pol ein Paar Permanentmagnete (34) umfasst, wobei jeder Magnet (34) zwei gegenüberliegende Flächen (58; 60) und zwei entgegengesetzte Pole (N; S) aufweist, die sich jeweils auf einer der gegenüberliegenden Flächen (58; 60) des Magneten (34) befinden;
wobei in jedem sich ergebenden Pol die Magnete (34) so angeordnet sind, dass sie Flächen (58) mit Polen (N; S) gleicher Polarität aufweisen, die radial nach außen und zueinander weisen, wobei die Verbindung dieser Pole die Polarität des sich ergebenden Pols bestimmt;
in jedem sich ergebenden Pol die Flächen (58) der Magnete mit gleichen Polaritäten, die nach außen gerichtet sind, zwischen sich einen Winkel β zwischen 95° und 100° bilden.

2. Prüfstand (2) nach Anspruch 1, **dadurch gekennzeichnet, dass** der Winkel β gleich 100° ist.

3. Prüfstand (2) nach einem der Ansprüche 1 bis 2, **dadurch gekennzeichnet, dass** der Rotor (30) einen Magnettrommelstapel (40) umfasst, in den Magnete (34) eingesetzt sind, wobei der Rotor (30) acht sich ergebende Magnetpole und sechzehn Magnete (34) umfasst.

4. Prüfstand (2) nach einem der Ansprüche 1 bis 3, **dadurch gekennzeichnet, dass** der Rotor (30) einen zylindrischen Körper bildet, dessen Außenfläche (50) einen oder mehrere Vorsprünge (48) aufweist, die hydrodynamische Dämpfer bilden, wobei die Vorsprünge (48) gegebenenfalls mindestens eine kreisförmige Reihe von Vorsprüngen (48) bilden, die so gestaltet sind, dass sie den Rundlauf zwischen dem Ständer (28) und dem Rotor gewährleisten.

5. Prüfstand (2) nach Anspruch 4, **dadurch gekennzeichnet, dass** mindestens einer oder jeder Vorsprung (48) ein Profil in einer Ebene senkrecht zur Drehachse (14) aufweist, wobei ein Teil (52) die Außenfläche (50) des Rotors (30) im Wesentlichen berührt und ein Teil (54) sich im Wesentlichen radial erstreckt.

6. Prüfstand (2) nach einem der Ansprüche 1 bis 5, **dadurch gekennzeichnet, dass** der Rotor (30) einen ersten Satz von axialen Kühlkanälen (46) aufweist, die zwischen den Magneten (34) jedes sich ergebenden Pols angeordnet sind, wobei die ersten Kanäle (46) in einem Ringbereich (62) angeordnet sind, der radial durch die radiale Höhe der Magnete (34) begrenzt ist.

7. Prüfstand (2) nach Anspruch 6, **dadurch gekennzeichnet, dass** die ersten Kanäle (46) zylindrisch sind, der Abstand D1 zwischen der Außenfläche (50) des Rotors und jedem ersten Kanal (46) größer oder gleich dem Abstand D2 zwischen jedem ersten Kanal (46) und jedem zugehörigen Magneten (34) ist, wobei der Durchmesser der Kanäle (46) kleiner als die Breite, vorzugsweise kleiner als die Hälfte der Breite der Flächen (58) der Magnete ist, die Pole derselben Polarität aufweisen und nach außen gerichtet sind.

8. Prüfstand (2) nach einem der Ansprüche 1 bis 7, **dadurch gekennzeichnet, dass** der Rotor (30) eine zweite Gruppe von axialen Kühlkanälen (36) aufweist, wobei die Drehachse (14) radial näher an der zweiten Gruppe von Kanälen (36) als an den Magneten (34) angeordnet ist.

9. Prüfstand (2) nach einem der Ansprüche 6 bis 8, **dadurch gekennzeichnet, dass** der Rotor (30) ein Zentrifugalgebläse (38) mit radialen Schaufeln umfasst, die so gestaltet sind, dass sie einen Luftstrom durch jeden Kühlkanal (36; 46) antreiben.

10. Prüfstand (2) nach einem der Ansprüche 6 bis 9, **dadurch gekennzeichnet, dass** die Magnete (34) einen großen Teil des Umfangs des Rotors (30) winklig einnehmen, wobei die Magnete (34) optional einen großen Teil des Umfangs jedes Kanals (36; 46) mindestens eines Satzes von Kanälen, vorzugsweise jedes Satzes von Kanälen, abdecken.

11. Prüfstand (2) nach einem der Ansprüche 1 bis 10, **dadurch gekennzeichnet, dass** er eine Steuereinheit (16), die so ausgelegt ist, dass sie das vom Dynamometer (10) ausgeübte Widerstandsdrehmoment steuert, und gegebenenfalls einen Drehmomentmesser (18) umfasst, der mit dem Dynamometer (10) verbunden und an die Steuereinheit (16) angeschlossen ist, um das Widerstandsdrehmoment zu messen, das das Dynamometer (10) auf die Turbomaschine (4) ausübt.

## Claims

1. Test bench (2) for a double-flow turbomachine (4), the test bench (2) comprising a zone for receiving a turbomachine to be tested and a dynamometer (10) connected to the turbomachine (10), the dynamometer (10) comprising a rotating electric machine (22) comprising a stator (28) and a rotor (30), the bench being **characterized in that** the rotor (30) of the dynamometer (10) is adapated to rotate at 7500 rpm, the rotor (30) having a circular row of resultant magnetic poles of which the polarities form an alternation of opposed magnetic poles;
each resultant pole including a pair of permanent magnets (34), each magnet (34) having two opposed faces (58; 60) and two opposed poles (N; S) each located on one of the opposed faces (58; 60) of the magnet (34);
in each resultant pole the magnets (34) are disposed so as to have faces (58) having poles (N; S) of identical polarities which faces are oriented radially outwardly and facing each other, the combination of said poles determining the polarity of the resultant pole;
wherein
in each resultant pole the outwardly oriented faces (58) of magnets of identical polarities form, therebetween, an angle β between 95° and 100°.

2. Test bench (2) according to claim 1, wherein the angle β is equal to 100°.

3. Test bench (2) according to claim 1 or 2, wherein the rotor (30) comprises a stack of magnetic sheets (40) in which the magnets (34) are inserted, and the rotor (30) comprises eight resultant magnetic poles and sixteen magnets (34).

4. Test bench (2) according to any of claims 1 to 3, wherein the rotor (30) forms a cylindrical body of which the outer surface (50) has one or more bulges (48) forming hydrodynamic dampers, the bulges (48) forming at least one circular row of bulges (48) configured to ensure a concentricity between the stator (28) and the rotor (30).

5. Test bench (2) according to claim 4, wherein at least one or each bulge (48) comprises a profile, in a plane perpendicular to the axis of rotation (14), with a portion (52) generally tangential to the outer surface (50) of the rotor (30), and a portion (54) extending primarily radially.

6. Test bench (2) according to one of claims 1 to 5, wherein the rotor (30) comprises a first set of axial cooling channels (46) disposed between the magnets (34) of each resultant pole, the first channels (46) being accommodated in an annular zone (62) delimited radially by the radial height of the magnets (34).

7. Test bench (2) according to claim 6, wherein the first channels (46) are cylindrical, and the distance D1 between the outer surface (50) of the rotor and each first channel (46) is greater than or equal to the distance D2 between each first channel (46) and each associated magnet (34), the diameter of the channels (46) being less than the width, preferably less than half the width, of the outwardly oriented faces (58) of magnets having poles of identical polarities.

8. Test bench (2) according to one of claims 1 to 7, wherein the rotor (30) comprises second axial cooling channels (36), the axis of rotation (14) being radially closer to the second channels (36) than to the magnets (34).

9. Test bench (2) according to one of claims 6 to 8, wherein the rotor (30) comprises a centrifugal fan (38) with radial blades configured to drive a circulation of air through each cooling channel (36; 46).

10. Test bench (2) according to one of claims 6 to 9, wherein the magnets (34) occupy, angularly, the majority of the circumference of the rotor (30), the magnets (34) possibly covering the majority of the circumferential extension of each channel (36; 46) of at least one set of channels, preferably of each set of channels.

11. Test bench (2) according to claim 10, wherein it comprises a control unit (16) configured to control the resistive torque exerted by the dynamometer (10), and preferably a torque gauge (18) connected to the dynamometer (10) and connected to the control unit (16) so as to measure the resistive torque that the dynamometer (10) opposes to the turbomachine (4).
